# EUROPÄISCHE PATENTSCHRIFT

(11) **EP 2 946 662 B1**
(45) Veröffentlichungstag und Bekanntmachung des Hinweises auf die Patenterteilung: **21.03.2018**
(21) Anmeldenummer: 15001216.9
(22) Anmeldetag: 24.04.2015
(51) Int. Cl.: A01K 63/06, F21V 21/088, F21W 131/308

(54) **BELEUCHTUNGSEINRICHTUNG FÜR EIN AQUARIUM ODER TERRARIUM**
LIGHTING DEVICE FOR AN AQUARIUM OR TERRARIUM
DISPOSITIF D'ÉCLAIRAGE POUR UN AQUARIUM OU TERRARIUM

(30) Priorität: 23.05.2014 DE 202014004262 U
(43) Veröffentlichungstag der Anmeldung: 25.11.2015
(73) Patentinhaber: Dennerle GmbH, 66981 Münchweiler (DE)
(72) Erfinder: Scheen, Matthias, 66919 Obernheim / Kirchenarnbach (DE)
(74) Vertreter: Kesselhut, Wolf

(56) Entgegenhaltungen:
- CN-U- 202 959 384
- CN-U- 203 262 053
- CN-U- 203 302 168
- KR-A- 20100 109 175
- US-A1- 2002 114 155
- US-A1- 2011 044 030
- US-A1- 2011 253 056

## Beschreibung

Die Erfindung betrifft eine Beleuchtungseinrichtung für ein Aquarium oder Terrarium gemäß dem Oberbegriff von Anspruch 1.

Zur Beleuchtung von Aquarien und Terrarien, die bekanntermaßen einen an der Oberseite offenen Glasbehälter mit stehenden Seitenwänden besitzen, werden üblicher Weise Beleuchtungseinrichtungen eingesetzt, die von oben her nach Art eines Deckels auf den umlaufenden Rand der Seitenwände aufgesetzt werden. Eine solche Beleuchtungseinrichtung ist für das Wachstum und das Wohlbefinden der im Aquarium lebenden Tiere und Pflanzen wichtig.

Zunehmend werden als Leuchtmittel LEDs eingesetzt, die gegenüber herkömmlichen Leuchtstofflampen den Vorteil besitzen, dass diese erheblich weniger Energie verbrauchen und zudem die Lebensdauer um ein Vielfaches höher ist als bei konventionellen Leuchtmitteln. Darüber hinaus ist eine unbedenkliche Entsorgung der Leuchtdioden möglich. In der DE 20 2010 008 645 U1 ist eine LED-Aquariumbeleuchtung beschrieben, bei der eine LED-Lampenröhre zum Einsatz gelangt, die sich über die gesamte Öffnung des Behälters hinweg erstreckt. Wenn das Aquarium gereinigt wird oder während der Befüllung an der Aquariumeinrichtung gearbeitet wird, muss die Beleuchtungseinrichtung abgenommen werden, da der Innenraum des Behälters ansonsten mit den Händen nicht oder nur schwer zugänglich ist. Dies wiederum hat zur Folge, dass das Aquarium während der Arbeiten nicht ausgeleuchtet ist und somit die Arbeiten erschwert werden.

Aus der CN 202959384 U ist eine Beleuchtungseinrichtung für ein Aquarium oder Terrarium bekannt, welches einen nach oben hin offenen Behälter mit stehenden Seitenwänden besitzt. Die Beleuchtungseinrichtung umfasst eine Lichtquelle in Form von Leuchtdioden, die an einem Rahmen auf dem oberen Rand der Seitenwände angeordnet ist, wobei der Rahmen auf dem oberen Rand der Seitenwände positionierbare Rahmenprofile umfasst, an deren Unterseite die Leuchtdioden angeordnet sind. Das Dokument gibt keinen Hinweis auf den Einsatz von Rahmenprofilen mit einem L-förmigen Querschnitt, bei dem die vertikal verlaufenden Schenkel sich entlang der Außenseite einer Seitenwand erstrecken und gleichzeitig sowohl einen Anschlag, als auch eine Blende bilden, welche die direkte Sicht auf die LEDs verhindert.

Die CN 203302168 U offenbart eine Aquarium-Beleuchtung mit LEDs, die von der Seite aus an einer Scheibe des Aquariums montiert wird und den Innenraum des Aquariums durch die Glasscheibe hindurch horizontal beleuchtet.

Die KR 2010 0109 175 A beschreibt ein Aquarium mit einer LED-Beleuchtung, die an einem Rahmen aufgenommen ist, welcher auf den Seitenwänden des Aquariums montiert ist. Das Dokument offenbart dabei verschiedene Ausführungsformen von LED-Beleuchtungen, bei denen die LEDs stirnseitig auf der Oberseite der Glasscheibe montiert sind und ausschließlich in die Glasscheibe hineinleuchten, bzw. an einer vertikalen Stirnfläche der Seitenwände befestigt werden, um in vertikaler Richtung in die Glasscheibe hinein zu leuchten und innerhalb von dieser eine Lichtausbreitung zu bewirken. Das Dokument gibt keinen Hinweis auf eine L-förmige Ausgestaltung der Rahmenprofile.

Die CN 203 262 053 U zeigt weiterhin ein Aquarium mit LEDs, die in einer der Seitenwände versenkbar sind und durch ein Rahmenprofil abgedeckt werden. Die Seitenwände umfassen dekorative lichtbrechende Vertiefungen, die Zierzwecken dienen. Die Beleuchtungseinrichtung umfasst somit keinen Rahmen, welcher L-förmige Rahmenprofile aufweist, die auf den oberen Rand eines Aquariums oder Terrariums aufsetzbar sind.

Der Erfindung liegt daher die Aufgabe zugrunde eine Beleuchtungseinrichtung für ein Aquarium oder ein Terrarium zu schaffen, mit der eine optimale blendfreie Ausleuchtung des Behälterinnenraums möglich ist.

Diese Aufgabe wird durch eine Beleuchtungseinrichtung mit den Merkmalen von Anspruch 1 gelöst.

Weitere Merkmale der Erfindung sind in den Unteransprüchen beschrieben.

Gemäß der Erfindung umfasst eine Beleuchtungseinrichtung für ein Aquarium oder Terrarium, welches einen nach oben hin offenen Behälter mit stehenden Seitenwänden besitzt, eine Lichtquelle in Form von Leuchtdioden, die sich in einem Rahmen befinden, der auf dem oberen Rand der Seitenwände angeordnbar ist. Die Beleuchtungseinrichtung umfasst weiterhin wenigstens drei im Winkel, vorzugsweise im rechten Winkel, zueinander angeordnete und auf dem oberen Rand der Seitenwände positionierbare Rahmenprofile, an deren Unterseite die Leuchtdioden angeordnet sind. Die Rahmenprofile besitzen einen L-förmigen Querschnitt, wobei der kurze, bzw. vertikale Schenkel des Profils sich entlang des äußeren Rands der Seitenwände in Abwärtsrichtung erstreckt und die LEDs auf der Innenseite des langen, bzw. horizontalen Schenkels des Profils angeordnet sind. Der Werkstoff kann z.B. Aluminiumblech mit einer Dicke von z.B. 0,5 bis 2 mm sein, auf das die LEDs z.B. direkt aufgeklebt sein können. Der vertikale Schenkel des "L", der z.B. eine Länge von 0,5 bis 1 cm besitzen kann, dient in diesem Falle gleichzeitig als Anschlag und als Blende, welche die direkte Sicht auf die LEDs verhindert. Hierdurch ist in vorteilhafter Weise eine gute Abfuhr der Verlustwärme der LEDs über die Oberseite des Metallblechs gewährleistet, wodurch die LED-Dichte, bzw. die Strahlungsleistung der LEDs entsprechend erhöht werden kann, ohne dass sich der Innenraum des Behälters zu stark aufheizt.

Gegenüber den bekannten Aquariumbeleuchtungen sind die LEDs hierbei bevorzugt lediglich entlang des oberen Randes der bevorzugt geschlossen umlaufenden, aus Glas geformten Seitenwände des Aquariumbehälters angeordnet. Die LEDs, die in einer oder mehr Reihen angeordnet sind, befinden sich dabei vorzugsweise ausschließlich auf der Höhe des Innenraums, d.h. in einem geringen Abstand von der Innenfläche der Seitenwände.

Es stellt einen besonderen Vorteil der Erfindung dar, dass der Innenraum des Behälters durch die zwischen den einander gegenüberliegenden Rahmenprofilen gebildete Öffnung bei eingeschalteten LEDs frei zugänglich ist. Hierdurch kann ohne nennenswerte Einschränkungen mit Netzen, Hilfswerkzeugen oder Absaugvorrichtungen hantiert werden, wobei die Ausleuchtung des Aquariums auch während der Arbeiten stets gegeben ist.

Ein weiterer Vorteil der erfindungsgemäßen Ausführungsform gegenüber Aquarien mit Abdeckhauben in denen die Beleuchtungseinrichtung integriert ist, besteht darin, dass die von den LEDs abgegebene Wärme ungehindert aufsteigen kann, bzw. über die Metallprofile abgeleitet wird und sich dadurch nicht im Bereich der Wasseroberfläche staut. Sofern jedoch eine Beheizung des Innenraums durch die LEDs gewünscht ist, kann auf die Oberseite der Rahmenprofile eine kostengünstige, ggf. auch durchsichtige Abdeckplatte, z.B. eine Glas- oder Plexiglasplatte, aufgelegt werden, durch die hindurch der Innenraum weiterhin von oben her betrachtet werden kann.

Bei einer bevorzugten Ausführungsform der Erfindung besteht der Rahmen aus insgesamt drei Rahmenprofilen, die von oben her betrachtet U-förmig ausgebildet sind, und sich entlang einer ersten, zweiten und dritten Seitenwand eines z.B. vier Seitenwände aufweisenden. Behälters erstrecken.

Ein solcher U-förmiger Rahmen bringt den Vorteil mit sich, dass am Rahmen keine Öffnungen für den Austritt von Stromkabeln oder Belüftungsleitungen mehr vorgesehen werden müssen.

Alternativ kann der Rahmen jedoch auch vier Rahmenprofile umfassen, die von oben her betrachtet einen geschlossenen, rechteckigen oder quadratisch ausgestalteten Rahmen bilden.

Die Rahmenprofile können auch in einem beliebigen anderen Winkel zueinander angeordnet sein, z.B. passend für ein trapezförmiges Aquarium. Der Rahmen kann weiterhin auch aus mehr als vier Rahmenprofilen bestehen, z.B. aus sechs Profilen passend für ein sechseckiges Aquarium oder aus acht Profilen, passend für ein achteckiges Aquarium.

Darüber hinaus kann der Rahmen kreisförmig gebogen sein, passend für ein rundes Aquarium oder einer oder mehrere Rahmenprofile können kreisbogenförmig ausgeführt sein, passend für Aquarien mit einer oder mehreren kreisbogenförmig ausgestalteten Seitenwänden.

Nach einem weiteren der Erfindung zugrunde liegenden Gedanken können auf der Unterseite der Rahmenprofile Positioniermittel, insbesondere Positionierstifte, Vorsprünge oder Positionierleisten, angeordnet sein, die sich über den oberen Rand der Seitenwände hinaus in den Innenraum des Behälters hinein erstrecken, um den Rahmen gegenüber den Seitenwänden gegen ein unbeabsichtigtes Verschieben zu fixieren.

Bei dieser Ausführungsform ist es von besonderem Vorteil, wenn die Position der Positioniermittel an wenigsten zwei Rahmenprofilen veränderbar ist, da sich Maßtoleranzen in den äußeren Abmessungen und den Winkeln der Seitenwände, die insbesondere bei der Fertigung von einteiligen Glasbehältern für sogenannte "Nanocube"-Aquarien auftreten, hierdurch mit geringem Aufwand kompensiert werden können.

Bei der zuletzt beschriebenen Ausführungsform der Erfindung kann es weiterhin vorgesehen sein, dass die Positioniermittel gegen eine Feder verschiebbar innerhalb einer Nut an der Unterseite der Rahmenprofile aufgenommen sind, wobei vorzugsweise ein verschiebbares Positioniermittel an einem Rahmenprofil und ein festes, als Gegenanschlag wirkendes Positioniermittel an dem parallel zu diesem verlaufenden gegenüberliegenden Rahmenprofil angeordnet ist.

Um fertigungsbedingte Abweichungen des Winkels zweier aneinandergrenzender Seitenwände von dem vorzugsweise gewählten 90-Grad Winkel kompensieren zu können, kann es weiterhin vorgesehen sein, dass auch der Winkel in dem die Rahmenprofile im Bereich der Ecken des Rahmens aneinander gefügt sind, veränderbar ist.

Dies kann z.B. dadurch erfolgen, dass die Rahmenprofile aus einem dauerhaft verformbaren Werkstoff, insbesondere aus Metallblech oder Kunststoff bestehen und durch Biegen von Hand an den Verlauf der darunterliegenden Seitenwände angepasst werden können. Der Rahmen kann dazu z.B. aus einem einteiligen, durchgängig umlaufenden Blech oder Kunststoffprofil, z,B. einem Aluminiumprofil, bestehen, welches z.B. durch Tiefziehen erhalten wird und sich dementsprechend durch Anwenden einer entsprechend großen Kraft von Hand leicht in die gewünschte Form bringen lässt, bei der die Schenkel des U-förmigen Rahmens entlang der nicht im rechten Winkel zueinander angeordneten Seitenwände des Behälters verlaufen.

Nach einem weiteren der Erfindung zugrunde liegenden Gedanken sind die Leuchtdioden selektiv in Gruppen oder einzeln ein- und ausschaltbar, um die gewünschten Bereiche des Innenraums mehr oder minder stark zu beleuchten. Durch die erfindungsgemäße Anordnung von mehreren einzelnen LEDs, die bevorzugt auch unterschiedliche Farben und Abstrahlwinkel besitzen können, in einer, zwei oder auch mehr Reihen entlang eines jeden Rahmenprofils, ergibt sich auf einfache Weise die Möglichkeit, den Innenraum gewünschten Falls in unterschiedlichster Weise vollständig oder auch nur punktuell zu beleuchten.

Dies ist insbesondere dann ein Vorteil, wenn die Leuchtdioden mit einem Regler verbunden sind, Mittels eines Reglers lässt sich u.a. die Intensität, die Farbtemperatur und/oder die Dauer der Strahlung verändern.

Bei einer weiteren besonders bevorzugten Ausgestaltung der Erfindung ist es vorgesehen, dass Leuchtdioden unterschiedlicher Farbgebung eingesetzt werden. Dies ermöglicht neben einer natürlichen Beleuchtung auch verschiedene Beleuchtungseffekte, durch die bestimmte Objekte im Aquarium besonders hervorgehoben werden können.

Weitere Vorteile und vorteilhafte Ausgestaltungen der Erfindung sind der nachfolgenden Beschreibung, der Zeichnungen und den Ansprüchen entnehmbar.

Die Erfindung wird nachfolgend unter Bezugnahme auf die Zeichnungen anhand von bevorzugten Ausführungsformen beschrieben.

In den Zeichnungen zeigen:
Fig. 1 eine perspektivische Darstellung eines Aquariums mit einem LED-Rühmen,
Fig. 2 einen Schnitt durch das Aquarium entlang der in Figur 1 angedeuteten Linie II-II,
Fig. 3 eine Draufsicht nach Figur 2,
Fig. 4 eine Seitenansicht einer ersten Ausführungsform eines LED-Rahmens,
Fig. 5 eine Seitenansicht des LED-Rahmens nach Figur 4 im Teilschnitt,
Fig. 6 eine weitere Ausführungsform eines LED-Rahmens,
Fig. 7 eine Seitenansicht der erfindungsgemäßen Ausführungsform der Beleuchtungseinrichtung mit einem L-förmigen Rahmenprofil,
Fig. 8 eine seitliche Aufsicht auf ein Aquarium mit einem geschlossenen rechteckigen LED-Rahmen,
Fig. 9 eine Querschnittsansicht einer ersten, bei dem Aquarium von Fig. 8 eingesetzten Ausführungsform eines Rahmenprofils,
Fig. 10 eine Querschnittsansicht einer zweiten, bei dem Aquarium von Fig. 8 eingesetzten Ausführungsform eines Rahmenprofils, und
Fig. 11 eine Querschnittsansicht einer dritten, bei dem Aquarium von Fig. 8 eingesetzten Ausführungsform eines Rahmenprofils.

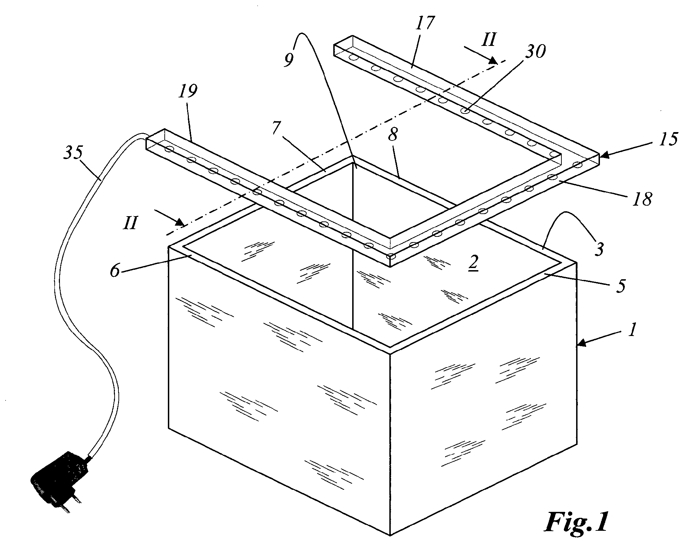

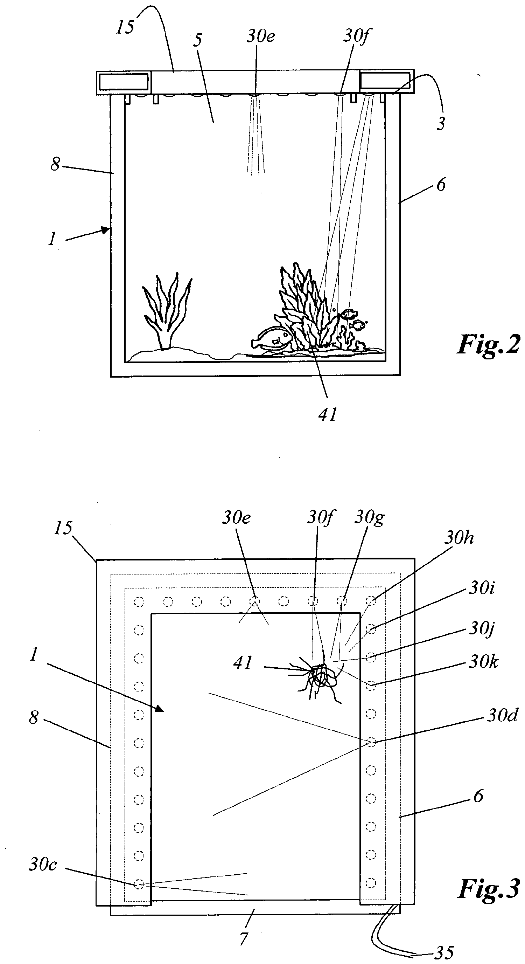

Wie in Fig. 1 gezeigt ist, umfasst ein Aquarium 1 einen Behälter, der einen Boden und vier rechtwinklige, flüssigkeitsdicht zusammengefügte stehende Seitenwänden 5, 6, 7, 8 aufweist, die einen oberen Rand 3 besitzen, welcher eine Öffnung 9 umgibt, die von oben her einen freien Zugang zum Innenraum des Behälters ermöglicht. Der erfindungsgemäße Rahmen 15 ist bei der in Fig.1 dargestellten Ausführung von U-förmiger Gestalt und besteht aus Rahmenprofilen 17, 18, 19 mit rechteckigem Querschnitt. Die Außenmaße des Rahmens 15 sind bevorzugter Weise etwas größer ausgelegt als die Außenmaße des Aquariums 1, um durch den Rand 3 eine gute und sichere Auflagefläche für den LED-Rahmen 15 zu bilden. Die Rahmenprofile 17, 18, 19 bestehen in der in Fig.1 und Fig.2 dargestellten Ausführungsform aus Profilen mit rechteckigem Querschnitt und besitzen eine Kammer zur Durchführung von Stromzuleitungen oder Verkabelungen der LEDs 30 untereinander.

Auf der Unterseite des Rahmens, der nachfolgend auch als LED-Rahmen 15 bezeichnet wird, sind eine Vielzahl von einzelnen. LEDs 30, 30a, 30b angeordnet. Diese sind am Rahmen 15 in der Weise befestigt, z-B. auf die Unterseite desselben aufgeklebt, dass sie oberhalb des Innenraums 2 positioniert sind und diesen von oben her ausleuchten. Die Stromversorgung erfolgt über ein Netzkabel 35 und eine nicht näher gezeigte Stromquelle.

Die zuvor beschriebene Ausführungsform, die nicht mit beansprucht wird, eröffnet zahlreiche Variationsmöglichkeiten sowohl hinsichtlich der Ausgestaltung des Rahmens 15, als auch der Intensität und einer damit verbundenen Qualität der Ausleuchtung sowie auch für mögliche ästhetische Beleuchtungseffekte. So besteht durch den Einsatz von LEDs die Möglichkeit, Objekte im Aquarium durch eine gezielte Anstrahlung hervorzuheben. Erreicht wird dies neben einer Veränderung der Intensität durch eine entsprechende Einstellung des Strahlungswinkels oder durch die Veränderung des Lichtkegels, wie dies in Figur 2 und 3 angedeutet ist. Während die LED 30c einen relativ schmalen Lichtkegel besitzt und zur Aquarienmitte hin ausgerichtet ist, strahlt die LED 30d einen breiten Lichtkegel über nahezu die gesamte Aquarienbreite aus. Die LED 30e ist ausschließlich auf den Randbereich konzentriert, während die LEDs 30f-30k auf ein im Aquarium befindliches Objekt, hier eine Pflanze 41, ausgerichtet sind.

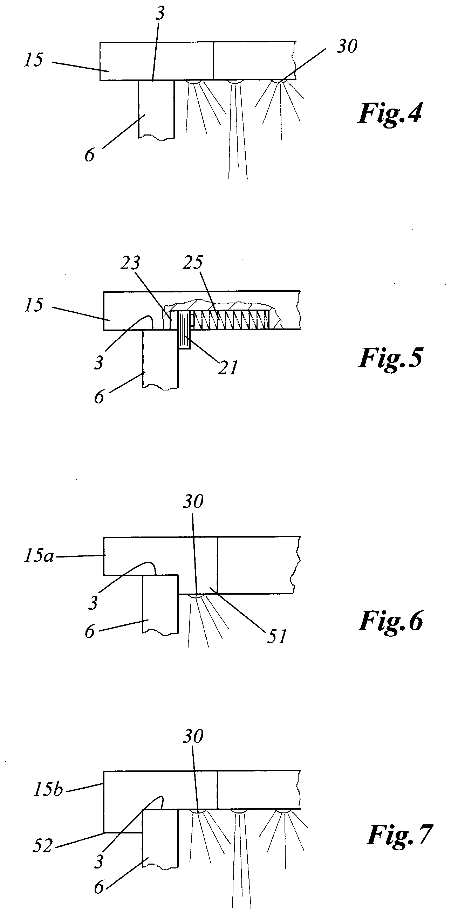

Die Figuren 4 und 5 zeigen Möglichkeiten, um den LED-Rahmen 15 an verschiedene Aquariummaße anzupassen und um den Rahmen 15 ohne zusätzliche Befestigungsmittel auf dem Aquarium befestigen zu können- Hierzu sind im LED-Rahmen 15 nach unten hin herausragende Positioniermittel in Form von Stiften 21 angeordnet, wie dies in Fig.5 angedeutet ist. Diese Stifte 21 sind verschiebbar in eine Nut 23 eingesetzt und werden von einer Feder 25 mit einer federelastischen Kraft beaufschlagt, sodass sich die Stifte durch Verschieben entgegen der Federkraft auf das lichte Maß des Aquariums 1 einstellen lassen. Durch die Federbelastung werden die Stifte 21 permanent gegen die Innenwand der jeweiligen Seitenwände 5, 6, 7 und 8 gepresst und fixieren den LED-Rahmen auf einfache und kostengünstige Weise über der Öffnung 9 des Aquariums 1.

Die Figuren 6 und 7 zeigen zwei alternative Ausführungsformen von Rahmen, bzw. Rahmenprofilen, deren Größe passgenau auf die entsprechende Aquariengröße abgestimmt ist. Figur 6 zeigt einen Rahmen 15a mit einem abgesetzten Innenkranz 51, während der Rahmen 15b einen das Aquarium 1 einfassenden Außenkranz 52 besitzt.

Die zuvor in den Figuren 1 bis 6 gezeigten Ausführungsformen stellen keine erfindungsgemäßen Lösungen dar, deren Schutz beansprucht wird.

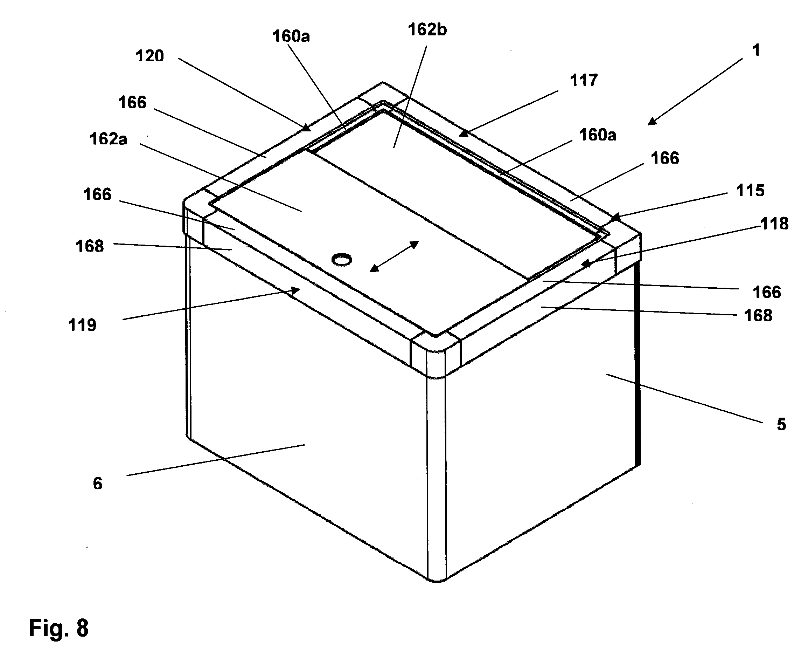

Gemäß der in Fig. 8 dargestellten erfindungsgemäßen Ausführungsform, bei der die den vorhergehenden Ausführungsformen analogen Bauteile mit um 100 erhöhten Bezugsziffern bezeichnet sind, umfasst der Rahmen 115 insgesamt vier Rahmenprofile 117, 118, 119 und 120, die über nicht näher bezeichnete Eck-Verbindungsstücke zu einem geschlossenen rechteckigen Rahmen 115 zusammengefügt sind.

Wie den Darstellungen der Figuren 8 bis 11, die unterschiedliche Ausführungsformen der Erfindung zeigen, hierbei im Detail entnommen werden kann, weisen die Profile 117 bis 120 an der Oberseite stufenförmig übereinander angeordnete zurückversetzte Führungsabschnitte 160a und 160b auf, auf denen die Ränder eines ersten Deckelelements 162a und eines zweiten Deckelelements 162b aufgenommen sind, mit welchen die Öffnung 9 des Aquariums 1 an der Oberseite verschlossen oder freigegeben werden kann. Die ersten und zweiten Deckelelemente 162a 162b besitzen bevorzugt jeweils die halbe Breite der Öffnung 9 und könnten nach oben hin von den Führungen 160a, 160b abgehoben werden, um die Öffnung vollständig freizugeben.

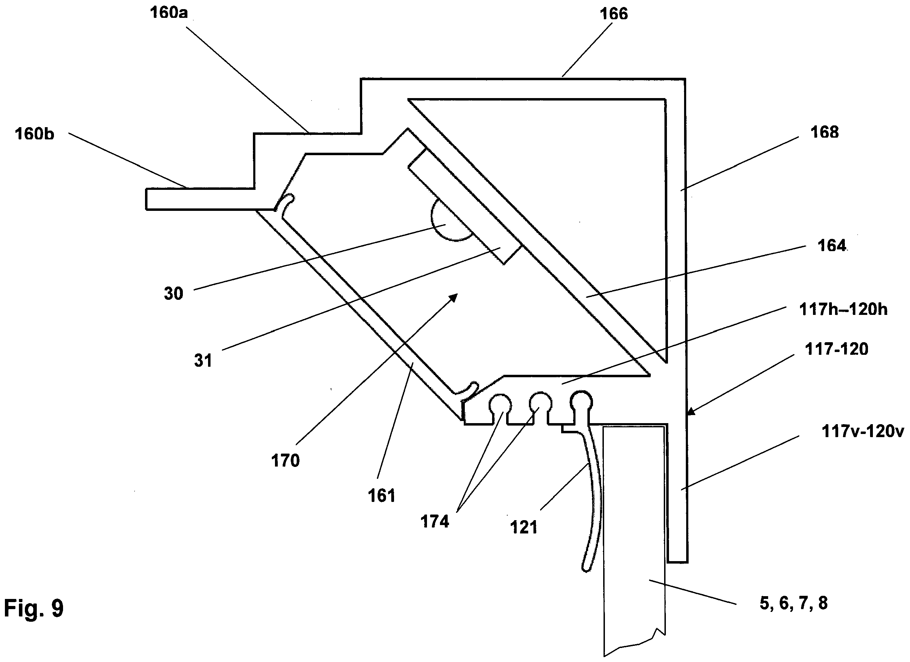

Eine erste Ausführungsform der bei dem erfindungsgemäßen Rahmen 115 des Aquariums 1 von Fig. 8 eingesetzten Rahmenprofile 117 bis 120 ist in Fig.9 gezeigt. Die Rahmenprofile 117 bis 120, die im unteren Bereich, welcher auf dem Rand 3 der Seitenwände 5 bis 8 aufliegt, L-förmig ausgestaltet sind, besitzen jeweils einen vertikalen Schenkel 117v - 120v, der sich auf der Außenseite der zugehörigen Seitenwand 5 bis 8 heraberstreckt, sowie einen horizontalen Schenkel 117h - 120h, der mit seiner Unterseite auf dem Rand 3 der zugehörigen Seitenwand aufliegt. Auf der Oberseite des L-förmigen Profils 117 bis 120 ist hierbei ein aus diesem entspringender, in einem Winkel von ca. 45 Grad zu dem horizontal verlaufenden Schenkel 117h - 120h angeordneter Trägersteg 164 angeordnet, an welchem die Leuchtdioden 30 aufgenommen sind. Oberhalb des geneigt verlaufenden Trägerstegs 164 ist parallel zu dem horizontal verlaufenden Schenkel 117h - 120h ein horizontal verlaufender Wandabschnitt 166 angeordnet, der sich von einem mit dem vertikalen Schenkel 117v - 120v fluchtenden vertikalen Wandabschnitt 168 aus horizontal erstreckt. Gemäß der Darstellung der Fig.9 schließen sich an den horizontalen Wandabschnitt 166 der erste oben liegende Führungsabschnitt 160a und an diesen der zweite unten liegende Führungsabschnitt 160b für die Deckelelemente 162a und 162b nach Art einer Stufe an. Weiterhin ist zwischen dem horizontal verlaufenden Schenkel 117h - 120h der Rahmenprofile 117 bis 120 und dem unteren Rand des zweiten Führungsabschnittes 160b ein Aufnahmeraum 170 für die LEDs 30 gebildet, welcher zum Innenraum 2 des Aquariums 1 hin durch eine für das Licht der LEDs 30 durchlässige Scheibe 161 abgedeckt wird, die bevorzugt von außen her lösbar an dem Profil 117 bis 120 befestigt, insbesondere in das Profil eingeklipst ist. Anders ausgedrückt sind die Leuchtdioden 30 gegen Spritzwasser geschützt in einem Aufnahmeraum 170 aufgenommen, der durch eine für das Licht der Leuchtdioden 30 durchlässige Scheibe 161 abgedeckt ist.

Um die L-förmigen Profile 117 bis 120 auf dem Rand 3 der Seitenwände 5 bis 8 flexibel positionieren zu können, weisen die horizontal verlaufenden Schenkel 117h bis 120h der Profile 117 bis 120 an ihrer Unterseite vorzugsweise eine oder auch mehrere Nuten 174 auf, in die Leisten 121 aus einem flexiblen Material, beispielsweise aus Kunststoff, eingesteckt werden können, wie dies in Verbindung mit den Ausführungsformen der Fig. 9 bis Fig.11 für unterschiedlich dicke Seitenwände 5 - 8 angedeutet ist.

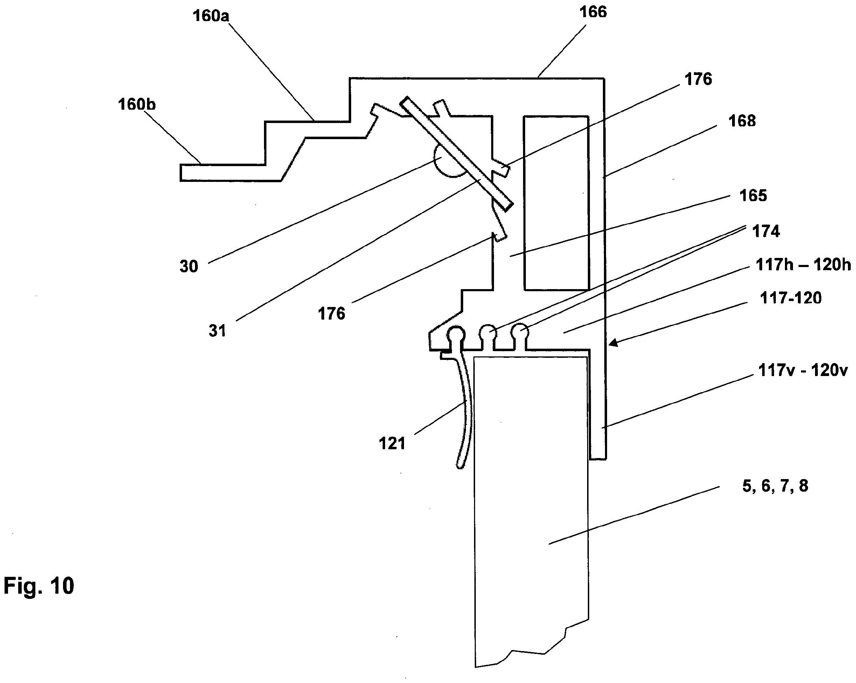

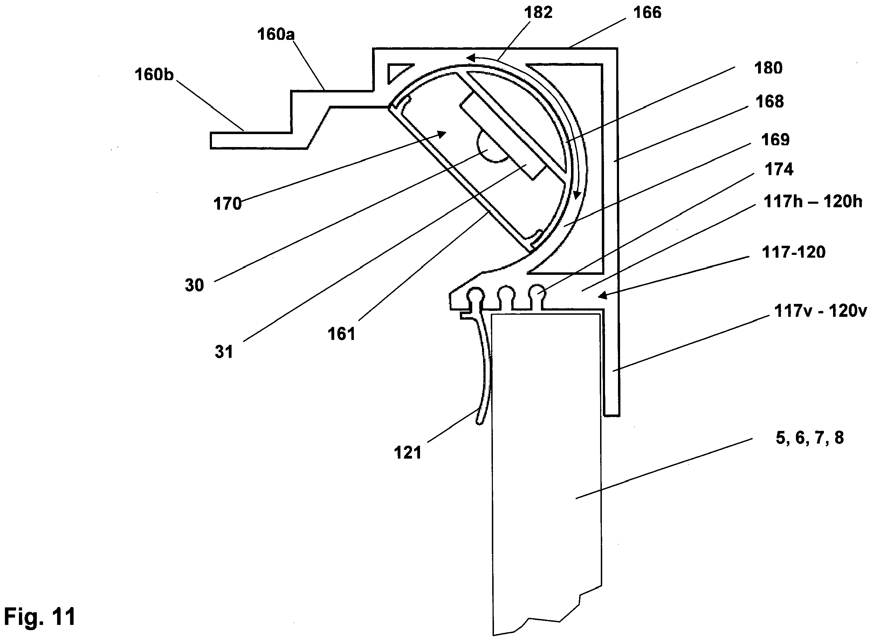

Um gemäß einem weiteren in den figuren10 und Fig.11 angedeuteten Gedanken der Erfindung den Winkel, in welchem die LEDs 30 ihr Licht in den Innenraum 2 des Aquariums 1 abstrahlen, den jeweiligen Verhältnissen anpassen zu können, kann es - wie in Fig.10 gezeigt - vorgesehen sein, dass in einem zusätzlichen, oberhalb des horizontal verlaufenden Schenkels 117h - 120h angeordneten vertikalen Steg 165 oder auch in die Innenseite des vertikalen Wandabschnitts 168 und/oder in den horizontal verlaufenden Wandabschnitt 166 nutenartige Vertiefungen 176 in unterschiedlichen Winkeln angeordnet sind, in die ein in diesem Falle streifenförmiger Trägerkörper 31, auf welchen die LEDs 30 aufgebracht sind, eingeschoben oder eingesteckt werden kann. Hierbei ist es gemäß einer nicht näher gezeigten Ausführungsform möglich, lediglich am vertikal verlaufenden Steg 165 entsprechende, in unterschiedlichen Winkeln von z.B. 25, 45 und 65 Grad in den Steg eingebrachte nutenartige Vertiefungen 166 vorzusehen, so dass der Trägerkörper 31 mit den LEDs 30 auch im Nachhinein aus einer der nutenartigen Vertiefungen 176 entnommen und in eine der anderen nutenartigen Vertiefungen mit einem anderen Winkel eingesteckt weiden kann.

Schließlich kann es gemäß einer weiteren in Fig.11 gezeigten Ausführungsform der Erfindung vorgesehen sein, anstelle eines geneigt verlaufenden Trägerstegs 164, bzw. eines vertikal verlaufenden Stegs 165 einen bogenförmigen Steg 169 an der Oberseite des horizontal verlaufenden Schenkels 117h - 120h der Rahmenprofile 117 bis 120 vorzusehen, in welchem ein im Querschnitt halbkreisförmiger Trägerkörper 180 in Richtung des Pfeils 182 verdrehbar aufgenommen ist, in welchem der Aufnahmeraum 170 zur Aufnahme der LED 30 angeordnet ist. Dieser Aufnahmeraum 170 kann an seiner Frontseite ebenfalls durch eine Scheibe 161 verschlossen sein, welche bevorzugt in den Trägerkörper 180 eingeklipst wird. Der Trägerkörper 180 ist beispielsweise in einem Winkelbereich von 25 bis 65 Grad verstellbar. Hierdurch ist die LED 30 gegen Wasser und Feuchtigkeit geschützt, wodurch es insbesondere ermöglicht wird, die für Aquariumleuchten geltenden Normen für einen Spritzwasserschutz gemäß dem Schutzgrad IPX7 zu erfüllen.

Um bei der in Fig.11 gezeigten Ausführungsform der Erfindung den Abstrahlwinkel bzw. die Richtung, in der das von den LEDs 30 emittierte Licht abgestrahlt wird, den jeweiligen Wünschen anzupassen, wird der Trägerkörper 180 innerhalb des bogenförmigen Stegs 169 von Hand in die entsprechende Richtung gedreht.

## Patentansprüche

1. Beleuchtungseinrichtung für ein Aquarium oder Terrarium (1), welches einen nach oben hin offenen Behälter mit stehenden Seitenwänden (5, 6, 7, 8) besitzt, wobei die Beleuchtungseinrichtung eine Lichtquelle in Form von Leuchtdioden (30) umfasst, die an einem Rahmen (15, 115) angeordnet ist, der auf dem oberen Rand (3) der Seitenwände (5, 6, 7, 8) anordnbar ist, wobei der Rahmen (15, 115) auf dem oberen Rand (3) der Seitenwände (5, 6, 7, 8) positionierbare Rahmenprofile (17, 18, 19; 117, 118, 119, 120) umfasst, an deren Unterseite die Leuchtdioden (30) angeordnet sind,
**dadurch gekennzeichnet,**
**dass** die Rahmenprofile (17, 18, 19; 117, 118, 119, 120) einen L-förmigen Querschnitt besitzen, wobei ein vertikal verlaufender Schenkel (117v - 120v) eines Profils sich entlang der Außenseite einer Seitenwand (5, 6, 7, 8), und ein horizontal verlaufender Schenkel (117h bis 120h) sich entlang der Oberseite des oberen Randes (3) einer Seitenwand (5, 6, 7, 8) erstreckt.

2. Beleuchtungseinrichtung nach Anspruch 1,
**dadurch gekennzeichnet,**
**dass** der Rahmen (15) drei Rahmenprofile (17, 18, 19) umfasst, die von oben her betrachtet U-förmig angeordnet sind.

3. Beleuchtungseinrichtung nach Anspruch 1,
**dadurch gekennzeichnet,**
**dass** der Rahmen (115) vier Rahmenprofile (117, 118, 119, 120) umfasst, die von oben her betrachtet rechteckig oder quadratisch ausgestaltet sind.

4. Beleuchtungseinrichtung nach Anspruch 1,
**dadurch gekennzeichnet,**
**dass** der Rahmen (15) drei oder vier Rahmenprofile umfasst, die in einem beliebigen Winkel zueinander angeordnet sind.

5. Beleuchtungseinrichtung nach Anspruch 1,
**dadurch gekennzeichnet,**
**dass** der Rahmen (15) mehr als vier Rahmenprofile, insbesondere sechs Profile, die passend für ein sechseckiges Aquarium angeordnet sind, oder acht Profile aufweist, die passend für ein achteckiges Aquarium angeordnet sind.

6. Beleuchtungseinrichtung nach Anspruch 1,
**dadurch gekennzeichnet,**
**dass** der Rahmen (15) ein Rahmenprofil umfasst, welches passend für ein in der Aufsicht rundes Aquarium kreisförmig gebogen ist.

7. Beleuchtungseinrichtung nach Anspruch 1,
**dadurch gekennzeichnet,**
**dass** der Rahmen (15) ein oder mehrere gerade und ein oder mehrere kreisbogenförmig gebogene Rahmenprofile umfasst, passend für Aquarien mit einer oder mehreren kreisbogenförmig ausgestalteten Seitenwänden (5, 6, 7, 8).

8. Beleuchtungseinrichtung nach einem der vorhergehenden Ansprüche,
**dadurch gekennzeichnet,**
**dass** an der Oberseite des horizontal verlaufenden Schenkels (117h - 120h) eines Rahmenprofils (117, 118, 119, 120) ein im Winkel verlaufender Trägersteg (164) entspringt, an welchem die Leuchtdioden (30) befestigt sind.

9. Beleuchtungseinrichtung nach einem der Ansprüche 1 bis 7,
**dadurch gekennzeichnet,**
**dass** an der Oberseite des horizontal verlaufenden Schenkels (117h - 120h) eines Rahmenprofils (117, 118, 119, 120) ein vertikal verlaufender Steg (165) vorgesehen ist, in welchem nutenartige Vertiefungen (176) in unterschiedlichen Winkeln eingebracht sind, in welche ein streifenartiger Trägerkörper (31), auf dem die Leuchtdioden (30) angeordnet sind, aufnehmbar ist.

10. Beleuchtungseinrichtung nach einem der Ansprüche 1 bis 7,
**dadurch gekennzeichnet,**
**dass** auf der Oberseite des horizontalen Schenkels (117h - 120h) des L-förmigen Rahmenprofils (117, 118, 119, 120) ein im Querschnitt bogenförmiger Steg (169) angeordnet ist, in dessen Innenraum ein von seiner Form her angepasster Trägerkörper (180) verschwenkbar aufgenommen ist, an dem die Leuchtdioden (30) befestigt sind.

11. Beleuchtungseinrichtung nach einem der vorhergehenden Ansprüche,
**dadurch gekennzeichnet,**
**dass** die Leuchtdioden (30) gegen Spritzwasser geschützt in einem Aufnahmeraum (170) aufgenommen sind, der durch eine für das Licht der Leuchtdioden (30) durchlässige Scheibe (161) abgedeckt ist.

12. Beleuchtungseinrichtung nach einem der vorhergehenden Ansprüche,
**dadurch gekennzeichnet,**
**dass** der Winkel zwischen zwei aneinander angrenzenden Rahmenprofilen (17, 18, 19; 117, 118, 119, 120) veränderbar ist.

13. Beleuchtungseinrichtung nach Anspruch 12,
**dadurch gekennzeichnet,**
**dass** die Rahmenprofile (17, 18, 19; 117, 118, 119, 120) aus einem dauerhaft verformbaren Werkstoff, insbesondere aus Metallblech oder Kunststoff bestehen, und durch Biegen von Hand an den Verlauf der darunterliegenden Seitenwände anpassbar sind.

14. Beleuchtungseinrichtung nach einem der vorhergehenden Ansprüche,
**dadurch gekennzeichnet,**
**dass** die Leuchtdioden (30) selektiv einzeln oder in Gruppen ein- und ausschaltbar sind.

## Claims

1. An illumination device for an aquarium or terrarium (1), which aquarium or terrarium has a container which is open at the top and which has vertical side walls (5, 6, 7, 8), wherein the illumination device comprises a light source in the form of light-emitting diodes (30) which is arranged on a frame (15, 115) which can be arranged on the upper edge (3) of the side walls (5, 6, 7, 8), wherein the frame (15, 115) comprises frame profiles (17, 18, 19; 117, 118, 119, 120) which can be positioned on the upper edge (3) of the side walls (5, 6, 7, 8), on the underside of which profiles the light-emitting diodes (30) are arranged,
**characterised in that**
the frame profiles (17, 18, 19; 117, 118, 119, 120) have an L-shaped cross-section, with a vertically running arm (117v - 120v) of a profile extending along the outer side of a side wall (5, 6, 7, 8), and a horizontally running arm (117h to 120h) extending along the upper side of the upper edge (3) of a side wall (5, 6, 7, 8).

2. An illumination device according to Claim 1,
**characterised in that**
the frame (15) comprises three frame profiles (17, 18, 19) which are arranged in a U-shape when viewed from above.

3. An illumination device according to Claim 1,
**characterised in that**
the frame (115) comprises four frame profiles (117, 118, 119, 120) which are configured to be rectangular or square when viewed from above.

4. An illumination device according to Claim 1,
**characterised in that**
the frame (15) comprises three or four frame profiles which are arranged at any angle whatsoever relative to each other.

5. An illumination device according to Claim 1,
**characterised in that**
the frame (15) has more than four frame profiles, in particular six profiles, which are arranged suitably for a hexagonal aquarium, or eight profiles, which are arranged suitably for an octagonal aquarium.

6. An illumination device according to Claim 1,
**characterised in that**
the frame (15) comprises a frame profile which is curved in a circle suitably for an aquarium which is round in a top view.

7. An illumination device according to Claim 1,
**characterised in that**
the frame (15) comprises one or more straight frame profiles and one or more frame profiles which are curved in an arc of a circle, suitable for aquaria with one or more side walls (5, 6, 7, 8) which are configured in an arc of a circle.

8. An illumination device according to one of the preceding claims,
**characterised in that**
on the upper side of the horizontally running arm (117h - 120h) of a frame profile (117, 118, 119, 120) there originates a supporting crosspiece (164) running at an angle, on which the light-emitting diodes (30) are fastened.

9. An illumination device according to one of Claims 1 to 7,
**characterised in that**
on the upper side of the horizontally running arm (117h - 120h) of a frame profile (117, 118, 119, 120) there is provided a vertically running crosspiece (165) in which groove-like depressions (176) are formed at different angles, in which a strip-like supporting body (31) on which the light-emitting diodes (30) are arranged can be received.

10. An illumination device according to one of Claims 1 to 7,
**characterised in that**
on the upper side of the horizontal arm (117h - 120h) of the L-shaped frame profile (117, 118, 119, 120) there is arranged a crosspiece (169) which is arcuate in cross-section, in the interior of which a supporting body (180) which is adapted in terms of its shape is received so as to be pivotable, on which the light-emitting diodes (30) are fastened.

11. An illumination device according to one of the preceding claims,
**characterised in that**
the light-emitting diodes (30) are received in a manner protected against splashing in a receiving space (170) which is covered by a pane (161) transparent to the light of the light-emitting diodes (30).

12. An illumination device according to one of the preceding claims,
**characterised in that**
the angle between two adjoining frame profiles (17, 18, 19; 117, 118, 119, 120) is changeable.

13. An illumination device according to Claim 12,
**characterised in that**
the frame profiles (17, 18, 19; 117, 118, 119, 120) consist of a permanently deformable material, in particular of sheet metal or plastics material, and are adaptable to the course of the underlying side walls by bending by hand.

14. An illumination device according to one of the preceding claims,
**characterised in that**
the light-emitting diodes (30) can be switched on and off selectively individually or in groups.

## Revendications

1. Dispositif d'éclairage pour un aquarium ou terrarium (1) ayant un réservoir ouvert vers le haut à parois latérales verticales (5, 6, 7, 8), le dispositif d'éclairage comprenant une source de lumière sous forme de diodes électroluminescentes (30), disposées sur un cadre (15, 115) pouvant être placé sur le bord supérieur (3) des parois latérales (5, 6, 7, 8), le cadre (15, 115) comprenant des profilés de cadre (17, 18, 19 ; 117, 118, 119, 120) pouvant être positionnés sur le bord supérieur (3) des parois latérales (5, 6, 7, 8) et sur le côté inférieur desquels sont disposées les diodes électroluminescentes (30),
**caractérisé en ce que**
les profilés de cadre (17, 18, 19 ; 117, 118, 119, 120) ont une section transversale en forme de L, une branche verticale (117v - 120v) d'un profilé s'étendant le long du côté extérieur d'une paroi latérale (5, 6, 7, 8) et une branche horizontale (117h - 120h) s'étendant le long du côté supérieur du bord supérieur (3) d'une paroi latérale (5, 6, 7, 8).

2. Dispositif d'éclairage selon la revendication 1,
**caractérisé en ce que**
le cadre (15) comprend trois profilés de cadre (17, 18, 19) qui, vus d'en haut, sont disposés en U.

3. Dispositif d'éclairage selon la revendication 1,
**caractérisé en ce que**
le cadre (115) comprend quatre profilés de cadre (117, 118, 119, 120) qui, vus d'en haut, sont de forme rectangulaire ou carrée.

4. Dispositif d'éclairage selon la revendication 1,
**caractérisé en ce que**
le cadre (15) comprend trois ou quatre profilés de cadre, qui sont disposés entre eux selon un angle quelconque.

5. Dispositif d'éclairage selon la revendication 1,
**caractérisé en ce que**
le cadre (15) comprend plus de quatre profilés de cadre, en particulier six profilés, disposés de manière appropriée pour un aquarium hexagonal, ou huit profilés, disposés de manière appropriée pour un aquarium octogonal.

6. Dispositif d'éclairage selon la revendication 1,
**caractérisé en ce que**
le cadre (15) comprend un profilé de cadre plié selon une forme circulaire, adapté à un aquarium rond en vue de dessus.

7. Dispositif d'éclairage selon la revendication 1,
**caractérisé en ce que**
le cadre (15) comprend un ou plusieurs profilés de cadre droits et un ou plusieurs profilés de cadre pliés selon une forme circulaire, adaptés à des aquariums ayant une ou plusieurs parois latérales (5, 6, 7, 8) de forme circulaire.

8. Dispositif d'éclairage selon l'une des revendications précédentes,
**caractérisé en ce que**
sur le côté supérieur de la branche horizontale (117h - 120h) d'un profilé de cadre (117, 118, 119, 120), prend naissance une entretoise de support (164) formant un angle, sur laquelle sont fixées les diodes électroluminescentes (30).

9. Dispositif d'éclairage selon l'une des revendications 1 à 7,
**caractérisé en ce que**
sur le côté supérieur de la branche horizontale (117h - 120h) d'un profilé de cadre (117, 118, 119, 120), est prévue une entretoise verticale (165) dans laquelle sont pratiqués des creux (176) de type rainure selon des angles différents, susceptibles de recevoir un corps support (31) de type bande, sur lequel sont fixées les diodes électroluminescentes (30).

10. Dispositif d'éclairage selon l'une des revendications 1 à 7,
**caractérisé en ce que**
sur le côté supérieur de la branche horizontale (117h - 120h) du profilé de cadre (117, 118, 119, 120) en forme de L, est disposée une entretoise (169) à section en forme d'arc, à l'intérieur de laquelle est logé, de manière orientable, un corps support (180) de forme adaptée, sur lequel sont fixées les diodes électroluminescentes (30).

11. Dispositif d'éclairage selon l'une des revendications précédentes,
**caractérisé en ce que**
les diodes électroluminescentes (30) sont logées, de manière protégée contre les projections d'eau, dans un espace de logement (170) recouvert par une vitre (161) laissant passer la lumière des diodes électroluminescentes (30).

12. Dispositif d'éclairage selon l'une des revendications précédentes,
**caractérisé en ce que**
l'angle entre deux profilés de cadre (17, 18, 19 ; 117, 118, 119, 120) adjacents est variable.

13. Dispositif d'éclairage selon la revendication 12,
**caractérisé en ce que**
les profilés de cadre (17, 18, 19 ; 117, 118, 119, 120) sont en un matériau déformable de manière permanente, en particulier en tôle métallique ou matière plastique, et peuvent être adaptés par pliage manuel à l'allure des parois latérales sous-jacentes.

14. Dispositif d'éclairage selon l'une des revendications précédentes,
**caractérisé en ce que**
les diodes électroluminescentes (30) peuvent être allumées ou éteintes de manière sélective, individuellement ou en groupes.
